# EUROPÄISCHE PATENTSCHRIFT

(11) **EP 0 824 503 B1**
(45) Veröffentlichungstag und Bekanntmachung des Hinweises auf die Patenterteilung: **01.09.1999**
(21) Anmeldenummer: 96915015.0
(22) Anmeldetag: 03.05.1996
(51) Int. Cl.: C02F 1/44, B01D 61/58, B01D 61/04, B01D 61/02

(54) **VERFAHREN ZUR ABWASSERAUFBEREITUNG UNTER GEWINNUNG VON TRINKWASSER IN HOHEN PRODUKTAUSBEUTEN**
WASTE WATER TREATMENT PROCESS FOR PRODUCING HIGH YIELDS OF DRINKING WATER
PROCEDE D'EPURATION D'EAUX USEES A HAUT RENDEMENT PERMETTANT D'OBTENIR DE L'EAU POTABLE

(30) Priorität: 12.05.1995 DE 19517473
(43) Veröffentlichungstag der Anmeldung: 25.02.1998
(73) Patentinhaber: Henkel-Ecolab GmbH & Co. OHG, 40554 Düsseldorf (DE)
(72) Erfinder: PAATZ, Kathleen, D-40589 Düsseldorf (DE); RÄHSE, Wilfried, D-40589 Düsseldorf (DE); KLUSCHANZOFF, Harald, D-40822 Mettmann (DE); FUES, Johann, Friedrich, D-41516 Grevenbroich (DE)
(74) Vertreter: Wacker, Manfred, Dr.
(86) Internationale Anmeldenummer: EP9601854
(87) Internationale Veröffentlichungsnummer: WO9635641

(56) Entgegenhaltungen:
- EP-A- 0 463 605
- PATENT ABSTRACTS OF JAPAN vol. 11, no. 30 (C-400) [2477] , 29.Januar 1987 & JP,A,61 200810 (KURITA WATER IND LTD), 5.September 1986,
- DESALINATION, Bd. 95, Nr. 2, Mai 1994, AMSTERDAM,NL, Seiten 171-188, XP000490104 R.RAUTENBACH: "waste water treatment by a combination of bioreactor and nanofiltration"
- WATER ENVIRONMENT RESEARCH, Bd. 66, Nr. 2, April 1994, ALEXANDRIA,VA,US, Seiten 133-139, XP000434114 M.D.KNOBLOCK ET AL: "membrane biological reactor system for treatment of oily wastewaters"
- PATENT ABSTRACTS OF JAPAN vol. 9, no. 247 (C-307), 3.Oktober 1985 & JP,A,60 102905 (CANON KK), 7.Juni 1985,
- PATENT ABSTRACTS OF JAPAN vol. 12, no. 248 (C-511) [3095] , 13.Juli 1988 & JP,A,63 036890 (KURITA WATER IND LTD), 17.Februar 1988,

## Beschreibung

Die Erfindung betrifft Modifizierungen und Optimierungen im Rahmen der Reinigung und Rückgewinnung von Wasser in Trinkwasserqualität aus Abwasser, das sowohl mit organischen Schmutzbelastungen unterschiedlichsten Ursprungs als auch Belastungen anorganischen Ursprungs verunreinigt sein kann. Die erfindungsgemäße Aufgabenstellung und die Konzeption zur technischen Lösung werden dabei im nachfolgenden anhand der Aufarbeitung von Wasch- und Spülwässern aus dem Aufgabenbereich der Reinigung und Rezyklisierung von Mehrweg-Verpackungen, insbesondere Mehrweg-Flaschen und/oder -Behältern der Nahrungsmittel- und Getränke-Industrie dargestellt. Der Einsatzbereich der erfindungsgemäßen Lehre ist aber nicht auf dieses spezielle Gebiet eingeschränkt. Organisch und gegebenenfalls anorganisch verunreinigte Wasch- beziehungsweise Spülwässer fallen heute in unterschiedlichsten Arbeitsbereichen an. Absatzweise oder insbesondere kontinuierlich müssen dabei häufig beträchtliche Mengen an hochreinem Wasch- und Spülwasser in diese Verfahrensschritte eingegeben werden, gleichzeitig fällt das belastete Abwasser in entsprechender Menge an und muß - unter Berücksichtigung der heutigen strengen ökologischen Anforderungen - unschädlich entsorgt werden. Beispiele für rein technische Bereiche der hier angesprochenen Art sind etwa die Papier- und die Zellstoffindustrie.

Die erfindungsgemäße Konzeption geht von der Aufgabe aus, das Wasch- beziehungsweise Spülwasser praktisch im Kreislauf zu führen. Für das Gebiet der Nahrungs- und Genußmittel stellt sich damit die Forderung, das als verunreinigter Ablauf anfallende hochbelastete verbrauchte Wasser in einen Frischwasserstrom von Trinkwasserqualität umzuwandeln. Dabei soll in kostengünstig optimierter Weise das Abwasser praktisch vollständig rezyklisiert werden können, so daß in der Regel weit mehr als 90 Vol.-% des Abwasserstromes, beispielsweise mehr als 95 bis 98 Vol.-%, des verbrauchten Wassers wieder als Frischwasserstrom eingesetzt werden können. Die Problematik einer solchen Aufgabenstellung wird am nachfolgenden Beispiel verständlich:

In einer Abfüllfabrik von beispielsweise Erfrischungsgetränken in Kunststoff-Mehrweg-Flaschen fallen im kontinuierlichen Betrieb große Mengen an organisch und anorganisch belasteten Abwässern an. Die Abwasserinhaltsstoffe sind dabei insbesondere:
Getränkereste aus den Flaschen und vom Überschäumen bei der Abfüllung; Leim und ausgelaugte Etiketten;
Chemikalien der CIP-Reinigung (Cleaning in place);
Sirupreste;
Spritzwasser;
Kettengleitmittel der Flaschentransportbänder.

Hochverschmutzte Abwässer dieser Art können beispielsweise CSB-Werte im Bereich zwischen 2.000 und 7.000 mg/l aufweisen, die insbesondere auf Sirupreste, eine erste CIP-Reinigung und dergleichen zurückgehen. Es ist bekannt, derart stark belastete Abwässer zunächst einmal einer biologischen Reinigung zu unterwerfen, die ihrerseits mehrstufig und dabei beispielsweise anaerob und/oder aerob durchgeführt werden kann. Häufig werden dabei solche hochverschmutzten Abwässer mit vergleichsweise niedriger belasteten Abwässern (CSB-Werte beispielsweise bei 200 bis 300 mg/l) abgemischt und dann in dieser Form in die biologische Vorreinigung eingeleitet, zur einschlägigen Literatur vgl. beispielsweise die Veröffentlichung M. Zumbrägel "Anaerobe Vorbehandlung industrieller Abwasser". EntsorgungsPraxis, Fachmagazin für Umweltschutz in Industrie- und Kommunalwirtschaft, Heft 2/1993.

Nach der aeroben Reinigung liegt der CSB-Wert des Gesamtabwassers einer Abfüllfabrik für Erfrischungsgetränke beispielsweise im Bereich von 100 bis 150 mg/l, die Leitfähigkeit dieses vorgereinigten Wassers liegt oberhalb 3 mS/cm. Die Schmutzbelastung eines derart vorgereinigten Wassers ist zwar gegenüber dem Einsatzmaterial abgesenkt, zur Verwendung als Frischwasser im Spül- und Reinigungsprozeß der Mehrweg-Flaschen vor ihrer erneuten Abfüllung mit dem Erfrischungsgetränk ist ein solcher Wasserproduktstrom aber vollständig ungeeignet.

Es ist bekannt, daß durch nachgeschaltete Membran-Trennverfahren die weiterführende Reinigung des Brauchwasserstromes möglich ist. So offenbart JP-61/200810 eine Reihenfolge von biologischer Behandlung, Ultrafiltration und Reversosmose. Es werden aber keine Angaben über den Druckbereich gemacht und es wird darüber hinaus das Konzentrat aus der ersten RO-Stufe einer Verdampfungs- und anschließend Verbrennungsanlage zugeleitet, während das Konzentrat aus der zweiten RO-Stufe ohne Aufteilung der ersten RO-Stufe recyclisiert wird. In EP 463 605 wird das Abwasser zur Entfernung von Eisen und Mangan vorbehandelt und dann sowohl einer Mitteldruck- als auch einer Hochdruckreversosmose zugeführt. Das Konzentrat aus der MD-RO wird eingedampft. R. Rautenbach und R. Mellis beschreiben in einem Artikel in Desalination. 95, 171-188 (1994) ein Abwasserreinigungsverfahren, bei dem eine biologische Behandlung mit Ultrafiltration und Nanofiltration verknüpft wird. Das Konzentrat aus der Nanofiltration wird recyclisiert, ohne daß Angaben über eine Phasentrennung gemacht werden. M. D. Knoblock et al beschreiben in Water Environment Research. 66, 133-139 (1994) ein Reinigungsverfahren für öliges Abwasser, bei dem eine biologische Behandlung mit einer Ultrafiltration kombiniert wird. In JP-60/102905 wird ein Verfahren offenbart, bei dem nach einer Ultrafiltration eine Reversosmose vorgenommen wird. Das Konzentrat der RO wird einer zweiten RO-Stufe zugeleitet. Schließlich offenbart JP-63/036890 ein Verfahren zur Reinigung von Brauchwasser mit Hilfe einer zweistufigen RO-Anlage mit dazwischen geschalteter Entgasungsstufe.

Hier setzt die erfindungsgemäße Lehre ein. Die Erfindung will eine Kombination ausgewählter Membran-Trennschritte- gewünschtenfalls bei gleichzeitiger Mitverwendung ausgewählter und im nachfolgenden geschilderter weiterer an sich bekannter Trennschritte - unter gleichzeitiger partieller Kreislaufführung von Teilströmen solcher Trennschritte vorsehen, die in ihrer Gesamtheit zu einer mehrfachen Optimierung führen. Optimiert werden soll der erforderliche Kostenaufwand zur Umwandlung des Brauchwassers in einen Produktstrom von Trinkwasserqualität, der als Frischwasser in dem Spül- und Reinigungsprozeß bedenkenlos eingesetzt werden kann. Optimiert werden soll aber gleichzeitig die Menge dieses Produktstromes in Trinkwasserqualität, wobei hier angestrebt wird, insbesondere mehr als 95 Vol.-% oder gar mehr als 98 vol.-% des eingesetzten verunreinigten Brauchwassers in den Produktstrom von Trinkwasserqualität zurückzuverwandeln. Umgekehrt ist damit verbunden die Optimierung der Reduzierung des abgetrennten Schmutzanteiles, der nach den jeweiligen Rechtsbestimmungen des Standortes der Abfüllanlage unter Wahrung der entsprechenden gesetzlichen Auflagen zu entsorgen ist.

Die erfindungsgemäße Lehre sieht zur Lösung dieser Aufgabenstellung die Kombination unterschiedlicher heute großtechnisch zugänglicher Typen der Membran-Trennverfahren - gegebenenfalls in Kombination mit weiteren an sich bekannten Trennschritten - vor, wobei gleichzeitig Teilströme dieser aufeinanderfolgenden Trennstufen derart rezyklisiert werden, daß letztlich der Produktstrom in Trinkwasserqualität in der geforderten hohen Ausbeute neben einer minimierten Menge an isolierten Schmutzbestandteilen anfallen.

Die erfindungsgemäß miteinander verbundenen Typen der Membran-Trennverfahren sind die Ultrafiltration - im nachfolgenden der Einfachheit halber mit "UF" bezeichnet -, die Reversosmose bei mittleren Arbeitsdrucken des Bereiches von etwa 5 bis 40 - 50 bar und insbesondere des Bereiches von wenigstens etwa 10 bis 30 bar oder auch 30 bis 50 bar - im nachfolgenden der Einfachheit halber als "MD-R0" bezeichnet - sowie in besonders wichtigen Ausführungsformen die bekannte Hochdruck-Reversosmose, die insbesondere bei Drucken im Bereich oberhalb 50 bar durchgeführt wird und im nachfolgenden der Einfachheit halber mit "HD-RO" bezeichnet ist.

Die hier angesprochenen Typen der Membran-Trennverfahren sind in der einschlägigen Fachliteratur ausführlich dargestellt, auf die hiermit verwiesen wird. Lediglich beispielhaft seien benannt R.E. Kesting "SYNTHETIC POLYMERIC MEMBRANES", Second Edition, JOHN WILEY & SONS, New York, 1985, SUN-TAK HWANG et al. "TECHNIQUES OF CHEMISTRY", Band VII, JOHN WILEY & SONS, New York, 1975, P.R. Keller "MEMBRANE TECHNOLOGY AND INDUSTRIAL SEPARATION TECHNIQUES", NOYES DATA CORPORATION, Park Ridge, New Jersey, 1976, P. Hoornaert "Reverse Osmosis" PERGAMON PRESS, Oxford, New York, 1984, J.I. Dytnerskij "Membranprozesse zur Trennung flüssiger Gemische", 1977 und W.S. Winston et al., "Membrane Handbook", VAN NOSTRAND REINHOLD, New York.

### Gegenstand der Erfindung

Gegenstand der erfindungsgemäßen Lehre ist in einer ersten Ausführungsform das Verfahren zur Schmutz- und/oder Abwasseraufbereitung mittels eines mehrstufigen Verfahrens zur Abtrennung der Verunreinigungen - im nachfolgenden auch als "Ballaststoffe" bezeichnet-, unter Einschluß wenigstens einer Membrantrennung und Kreislaufführung intermediär anfallender Konzentrat-Teilströme.

Das erfindungsgemäße Verfahren ist dadurch gekennzeichnet, daß man zur Gewinnung eines Produktstromes in Trinkwasserqualität und optimierter Ausbeute ein gewünschtenfalls teilgereinigtes Einsatzwasser einer Sequenz nachfolgender Membran-Trennverfahren unterwirft:
Ultrafiltration (UF) mit Rückführung des UF-Konzentrates;
Reversosmose des UF-Filtrats bei mittleren Arbeitsdrucken bis etwa 50 bar, bevorzugt bis etwa 40 bar (MD-RO), wobei hier 1-stufig, bevorzugt aber mehrstufig mit einer solchen MD-RO gearbeitet werden kann, unter Gewinnung des Produktwassers in Trinkwasserqualität als MD-RO-Filtrat;
Aufteilung des MD-RO-Konzentrates mittels weiterer Membran- und/oder Phasentrennung unter Gewinnung wenigstens eines wäßrigen Anteiles dieses Konzentrates mit abgereichertem Gehalt an Ballaststoffen
und Kreislaufführung dieses Konzentratanteiles in die MD-RO.

In einer weiteren Ausführungsform betrifft die Erfindung die Anwendung eines solchen Mehrstufenverfahrens zur Reinigung hochbelasteter und insbesondere entsprechend organisch und anorganisch verunreinigter Wasch- und/oder Prozeß-Abwässer unter Rückgewinnung von Frischwasser für das jeweilige Einsatzgebiet.

### Einzelheiten zur erfindungsgemäßen Lehre

Das Grundprinzip des erfindungsgemäßen Handelns, die dabei vorgesehene Verknüpfung der einzelnen, getrennt voneinander durchgeführten Verfahrensstufen und die erfindungsgemäß bevorzugten Elemente der Kreislaufführung von Teilströmen sind in übersichtlicher Form in den Verfahrensfließbildern der Schemata 1 bis 4 dargestellt. Im nachfolgenden werden anhand dieser schematischen Darstellungen die einzelnen Stufen des erfindungsgemäßen Verfahrens und ihre Verknüpfung miteinander erläutert. Dabei wird zunächst die erfindungsgemäße Elementenkombination in der Ausführungsform gemäß Schema 1 beschrieben.

Hochverschmutztes Abwasser mit einem CSB-Wert beispielsweise im Bereich bis 10.000 mg/l fällt als Einsatzwasser für die erfindungsgemäße Aufarbeitung zu einem Produktstrom in Trinkwasserqualität an. Der erfindungsgemäßen mehrstufigen Membrantechnologie kann hier in der Regel eine biologische Vorreinigung vorgeschaltet werden. Auf die eingangs zitierte Literatur zu solchen anaerob und/oder aerob geführten Behandlungsschritten wird verwiesen. Es kann gemäß den Angaben dieser Literatur hier besonders zweckmäßig sein, eine anaerobe Vorbehandlung mit einer nachfolgenden biologischen aeroben Behandlungsstufe zu verbinden.

Auch die erfindungsgemäßen Kombinationen der einzelnen Arbeitsschritte sehen im Bedarfsfall in der Vorreinigungsstufe die Kombination der anaeroben mit der nachgeschalteten aeroben Vorbehandlung vor. Die anaerobe Vorbehandlung wird in der Regel zur Vorreinigung von organisch hochbelasteten Abwässern - insbesondere mit CSB-Belastungen von wenigstens 8.000 mg/l, beispielsweise mit entsprechenden CSB-Werten im Bereich bis 100.000 mg/l - eingesetzt. Ohne Sauerstoffzusatz werden hier die organischen Abwasserinhaltsstoffe größtenteils in Biogas (Methan) umgesetzt, das auch erfindungsgemäß zur Steuerung des Energiehaushaltes des Gesamtverfahrens Verwendung finden kann.

Weniger stark organisch belastete Abwässer und/oder das Abwasser aus der anaeroben Vorbehandlungsstufe können der aeroben biologischen Vorbehandlung in an sich bekannter Weise unterworfen werden. In Betracht kommen hier insbesondere entsprechende Einsatzwässer mit CSB-Werten < 8.000 mg/l und einer Untergrenze des jeweiligen CSB-Wertes von wenigstens etwa 800 bis 1.000 mg/l.

Die beträchtliche Absenkung einer insbesondere organischen Belastung des eingesetzten Schmutzwassers wird hier möglich. Der wäßrige Produktstrom ist jedoch im Sinne der erfindungsgemäßen Aufgabenstellung nach wie vor das Einsatzmaterial. Sowohl seine anorganische Belastung mit beispielsweise löslichen Salzen als seine Restbelastung mit organischen Bestandteilen sowie insbesondere auch seine mikrobielle Verunreinigung bedingen die Notwendigkeit der Aufarbeitung dieses Einsatzmaterials im erfindungsgemäßen Verfahrenszyklus um zur Trinkwasserqualität im Prozeßwasser zu gelangen.

Die schematische Darstellung von Schema 1 zeigt die Sequenz der Verfahrensschritte in einer wichtigen Ausführungsform der Erfindung: An die biologische Abwasserbehandlung schließt sich zunächst die erste Membranstufe im Sinne des erfindungsgemäßen Handelns. Hier wird das Abwasser der Ultrafiltration unterworfen. In dieser Trennstufe anfallendes Konzentrat wird nicht verworfen sondern in die Vorstufe, insbesondere also die biologische Vorbehandlung zurückgeführt. Die in der schematischen Darstellung gezeigte Besonderheit der oxidativen Zwischenbehandlung des Konzentrates vor seiner Rückführung in die biologische Vorbehandlung stellt einen weiteren wichtigen Teilgedanken der erfindungsgemäßen Lehre dar, auf den nachfolgend noch im einzelnen eingegangen wird.

Das in der UF-Stufe anfallende Filtrat wird im erfindungsgemäßen Sinne der Reversosmose bei mittleren Arbeitsdrucken (MD-R0) zugeführt. Das Fließschema 1 zeigt zwei hintereinander geschaltete Arbeitsstufen der MD-RO, das Filtrat der zweiten MD-RO-Stufe ist der angestrebte Produktstrom in Trinkwasserqualität. Das Konzentrat der zweiten MD-RO-Stufe wird in die erste MD-RO-Stufe rückgeführt und bleibt damit dem Verfahrenskreislauf voll erhalten.

Das Konzentrat aus der ersten Arbeitsstufe der MD-RO wird einer getrennten, bevorzugt ebenfalls mehrstufigen Aufarbeitung durch die Reversosmose bei hohen Drucken (HD-RO) unterworfen. Gezeigt ist im Fließschema 1 die Aufarbeitung dieses Konzentratstromes in einem 2-stufigen Membrantrennverfahren unter den Bedingungen der HD-RO. Hier wird jetzt allerdings das Konzentrat aer Verfahrensstufe I der nachfolgenden HD-RO-Arbeitsstufe II unterworfen. Aus beiden Arbeitsstufen dieser HD-RO werden die Filtrate in den Produktstrom über die Arbeitsstufe I der MD-RO zurückgeführt. Die Arbeitsstufen I und II der Hochdruck-RO unterscheiden sich durch die jeweils eingesetzten Arbeitsdrucke. In der nachgeschalteten HD-RO wird bei substantiell höherem Arbeitsdruck gearbeitet als in der vorgängigen HD-RO-Stufe. Das nach der letzten Stufe anfallende HD-RO-Konzentrat ist mengenmäßig derart reduziert. daß die erfindungsgemäße Aufgabe der nahezu quantitativen Umwandlung des Schmutz- beziehungsweise Abwassers in einen Produktstrom von Trinkwasserqualität optimal erfüllt wird.

Die Leistungsfähigkeit der erfindungsgemäßen Elementenkombination wird durch das Zahlenmaterial des Beispielteiles belegt. Als relevante Qualitätsparameter werden dabei im einzelnen bestimmt:
der chemische Sauerstoffbedarf (CSB-Wert) in mg/l,
die Leitfähigkeit in mS/cm,
der Gesamt-Stickstoffgehalt in mg/l.
der Gesamt-Phosphorgehalt in mg/l.
der pH-Wert sowie
die Gesamtkeimzahl.

Durch die erfindungsgemäß vorgesehene stufenweise Reinigung des Hauptpermeatstromes unter gleichzeitiger gezielter Behandlung und weitaus überwiegender Rückführung intermediär anfallender Konzentratströme gelingt die technische Verwirklichung der erfindungsgemäßen Aufgabenstellung bei praktisch beliebigen Schmutzwässern als Einsatzmaterial bei realistischen Kosten/Nutzen-Verhältnissen. So können Abwässer mit CSB-Gehalten im Bereich von 5.000 bis 10.000 mg/l - oder auch deutlich höheren Werten - und gleichzeitig starken Beladungen an löslichen Salzen durch gezielten Einsatz der erfindungsgemäßen Elementenkombination in nahezu quantitativer Ausbeute zu Trinkwasserqualität umgewandelt werden. Dabei kann es in der Regel zweckmäßig sein, in biologischen Vorstufen zu einem Teilabbau, insbesondere organischer Verschmutzung zu kommen. Der Einsatz entsprechender anaerober und/oder aerober Biologie nach dem Stand der Technik kann wünschenswert sein. auf die eingangs zitierte Literatur zu diesen Reinigungsstufen nach dem Stand der Technik wird verwiesen.

Die erste als Membrantrennung ausgelegte Verfahrensstufe der erfindungsgemäßen Elementenkombination ist die Ultrafiltration. Abgetrennt werden hier nicht gelöste kolloidale Abwasserinhaltsstoffe sowie Makromoleküle, wobei die Trenngrenze der Membranen (CUT-OFF-Wert) weitgehenden Einfluß auf das primäre Trennergebnis hat.

Zur technischen Durchführung der Ultrafiltration stehen heute sowohl organische Membranen als insbesondere anorganische Membranen zur Verfügung. Organische Membranen führen bekanntlich leicht zu Wechselwirkungen zwischen dem Membranmaterial und den Inhaltsstoffen des Abwassers. Es bildet sich eine Deckschicht unmittelbar an der Membranoberfläche als Sekundärmembran. Die Membranen müssen häufiger gereinigt werden, dabei ist zu berücksichtigen, daß sie nur begrenzt temperaturstabil sind und durch stark saure beziehungsweise alkalische Reinigungsmittel zerstört werden können. Bevorzugt können dementsprechend für die Durchführung der Ultrafiltrationsstufe heute zugängliche anorganische Membrantypen sein, die beispielsweise aus einem Kohlenstoff-Stützmaterial und einer aufgesinterten Membranschicht aus Metalloxiden. beispielsweise Zirkoniumdioxid, bestehen. Die Membranen können auch beispielsweise in Chrom/Nickel-Stahlrohren zu Modulen zusammengefaßt sein. Aufgrund ihrer hohen Beständigkeit gegenüber praktisch allen zu berücksichtigenden Einflüssen wie Temperatur, Chemikalien. Angriff von MikroOrganismen, ihrer Druckunempfindlichkeit, ihrer hohen Leistung auch bei angehobener Viskosität durch Einsatz von Betriebsdrucken bis beispielsweise 10 bar und Anwendung von hohen Strömungsgeschwindigkeiten sind solche anorganischen Membranen bevorzugte Arbeitsmittel für die hier betroffene Arbeitsstufe der Ultrafiltration im Sinne des erfindungsgemäßen Verfahrens.

Wie in der schematischen Darstellung von Schema 1 gezeigt, kann eine wichtige Ausgestaltung des Verfahrens darin liegen, das bei der Ultrafiltration anfallende Konzentrat vor seiner Rückführung in das Reinigungsverfahren einer oxidativen Behandlung zu unterwerfen. Das Ergebnis einer solchen Oxidation kann die Molekülverkleinerung und/oder die Erhöhung der Sensitivität des organischen Schmutzmoleküls gegen bakteriellen Angriff sein. Je nach Beschaffenheit des Einsatzwassers und der im Gesamtverfahren vorgesehenen Vorbehandlung kann die Rückführung eines solchen oxidativ behandelten Konzentratstromes in die vorgeschaltete biologische Abwasserbehandlung zweckmäßig sein, es ist aber ebenso möglich, das Konzentrat der Ultrafiltration unmittelbar mit dem Schmutzwasserstrom zu vermischen, der der Ultrafiltration erstmalig zugeführt wird. Die oxidative Behandlung kann mit Chemikalien - hier insbesondere Wasserstoffperoxid - erfolgen, es sind aber auch entsprechende an sich bekannte physikalisch-chemische Behandlungsverfahren einsetzbar, insbesondere die Oxidation durch Bestrahlung mit UV-Strahlen. So haben Untersuchungen gezeigt, daß beispielsweise der Einsatz einer UV-Oxidationsanlage mit 400 J/m² und einer Wellenlänge der UV-Strahlen von 254 nm zu einer Reduktion des CSB-Wertes im Ultrafiltrationkonzentrat - auch ohne Zusatz von Oxidationsmitteln wie Wasserstoffperoxid - um 50% führen kann. Gegebenenfalls biologisch schwer abbaubare Inhaltsstoffe werden nach der Anoxidation und der Rückführung des Ultrafiltrationskonzentrates in die biologische Abwasserreinigung der mikrobiellen Abbaureaktion zugänglich.

Einsatzwässer für die Ultrafiltration können im Sinne der erfindungsgemäßen Lehre beispielsweise CSB-Werte bis 5.000 mg/l, vorzugsweise gleich/kleiner 3.000 mg/l und insbesondere gleich/kleiner 1.000 mg/l, aufweisen. Durch wirkungsvolle biologische Vorstufen kann im zu reinigenden Abwasser der Wert der organischen Belastung vorab schon wesentlich stärker gesenkt worden sein, so daß es in der Praxis häufig möglich ist mit Schmutzwässern in die Ultrafiltrationsstufe zu gehen, die CSB-Werte gleich/kleiner 500 mg/l, vorzugsweise gleich/kleiner 250 mg/l und insbesondere gleich/kleiner 150 mg/l, aufweisen.

Der Permeatstrom der Ultrafiltration wird dann der Membranreinigungsstufe der Reversosmose bei mittleren Drucken (MD-RO) zugeführt. In dieser Arbeitsstufe werden die gelösten Salze, z.B. Nitrat, Nitrit und/oder Phosphat, niedermolekulare organische Verbindungen und noch enthaltene Keime entfernt. Für den praktischen Einsatz haben sich hier insbesondere organische Reversosmose-Membranen in Spiralwickelmodulbauweise bewährt. Die in dieser Arbeitsstufe einzustellenden Arbeitsbedingungen sehen den Einsatz erhöhter, gleichwohl aber vergleichsweise beschränkter Arbeitsdrucke vor. Die obere Druckgrenze liegt im allgemeinen hier bei 50 bar, z.B. 40 bis 45 bar. Arbeitsdrucke schon im Bereich von 15 bis 35 bar und insbesondere von 25 bis 35 bar liefern die erwünschten hohen Raumzeitausbeuten bei der Permeatgewinnung. Bei Temperaturen des Abwassers im Bereich von 15 bis 35°C sind durchschnittliche Filtratflüsse im Bereich von wenigstens 50 l/h/m², vorzugsweise von wenigstens 60 l/hm², bei einem durchschnittlichen Salzrückhaltevermögen von wenigstens 90%, vorzugsweise wenigstens 95 bis 98% und insbesondere von wenigstens etwa 99% einstellbar.

Die Untersuchungen der Anmelderin haben gezeigt, daß die Grenzwerte der Trinkwasserverordnung üblicherweise bereits nach der ersten MD-RO-Arbeitsstufe eingestellt werden können. Aus Gründen der Betriebssicherheit, auch gerade bei schwankenden Salzgehalten im Abwasser, ist in der Regel eine zweite Arbeitsstufe der MD-RO vorgesehen. Grundsätzlich gelten hier zur Wahl der Membrantypen und der Arbeitsbedingungen die entsprechenden Angaben zur MD-RO-Stufe I. Der durchschnittliche Filtratfluß liegt in der MD-RO II in der Regel allerdings deutlich höher als in der MD-RO I. Hier können entsprechende Filtratflußwerte oberhalb 85 bis 95 l/h/m² bei sonst vergleichbaren Arbeitsbedingungen eingestellt werden.

Das keimfreie Permeat dieser Reversosmosestufe II steht als Trinkwasser zur weiteren Nutzung zur Verfügung. Das Konzentrat aus dieser MD-RO II fließt in die MD-RO I zurück.

Für die Einstellung der erfindungsgemäßen Zielsetzung in der Optimierung der Menge des Permeats in Trinkwasserqualität ist die Aufarbeitung des Konzentrates aus der MD-RO-Stufe I mitentscheidend. Hier sieht die erfindungsgemäße Konzeption gemäß dem Fließschema 1 die Behandlung dieses Teilstromes in einer nachgeschalteten, bevorzugt mehrstufig ausgeführten Reversosmose unter vergleichsweise höheren Arbeitsdrucken - HD-RO - vor. Im einzelnen gilt hier jetzt das Folgende:
Die Filtratströme der HD-RO werden dem Hauptstrom des wäßrigen Permeates wieder zugeführt. Dabei erfolgt diese Rückführung der HD-RO-Filtrate bevorzugt in die erste Arbeitsstufe der Reversosmose mit mittleren Arbeitsdrukken (MD-RO I). Durch Auslegung der HD-RO-Behandlung in einem mehrstufigen Verfahren gelingt die optimierte Einengung des Restkonzentrates, das letztlich den Verlust an wäßriger Phase bezogen auf das eingesetzte Schmutzwasser darstellt. Wie im Beispielsteil belegt, können hier Wasserverluste deutlich unterhalb 5%, vorzugsweise unterhalb 2 bis 3% und insbesondere kleiner 1% - jeweils als Vol.-% Wasser bezogen auf eingesetztes Schmutzwasser - eingestellt werden. Gemäß einer bevorzugten Ausführungsform der vorliegenden Erfindung gilt, daß das Einsatzwasser zu mehr als 85 Vol.-%, vorzugsweise zu mehr als 90 Vol.-% und insbesondere zu mehr als 95 bis 98 Vol.-% in Produktwasser von Trinkwasserqualität umgewandelt wird.

Zur Optimierung des angestrebten Zieles der Einschränkung des Wasserverlustes wird in einer mehrstufig ausgelegten HD-RO mit unterschiedlichen und dabei mit ansteigenden Drucken in den aufeinanderfolgenden Arbeitsstufen gearbeitet. So kann die HD-RO insgesamt bei Drucken gleich/größer 50 bar, vorzugsweise im Bereich von 60 bis 180 bar, vorgenommen werden, wobei eine erste HD-RO-Stufe bei Drucken kleiner 100 bar und eine abschließende HD-RO bei Drucken gleich/größer 100 bar durchgeführt werden kann.

Die in der HD-RO eingesetzten Membrantypen sind insbesondere die hier bekannten organischen Membranen in Form von Membrankissen mit innenliegendem Gewebespacer zur Permeatableitung, wobei eine Mehrzahl solcher Elemente in einem Plattenmodul zusammengefaßt sind.

Die Schemata 2 und 3 schildern in schematischer Darstellung zusätzliche Modifikationen des erfindungsgemäßen mehrstufigen Membran-Trennverfahrens mit den Kombinationen der Membran-basierten Trennschritte Ultrafiltration, MD-RO und HD-RO. Im einzelnen gilt hier das Folgende:
Schema 2 zeigt, wie das Verfahrensprinzip gemäß Schema 1 im Sinne der erfindungsgemäßen Zielsetzung einer Optimierung der Menge des zurückgewonnenen Trinkwassers dadurch verbessert werden kann, daß auch noch das Konzentrat aus der Arbeitsstufe II der HD-RO zur Rückgewinnung von Wasseranteilen eingesetzt wird. Dieses Konzentrat wird gemäß Schema 2 der Eindampfung unter Gewinnung eines wäßrigen Kondensatanteiles unterworfen, der ebenso wie die Filtrate aus den HD-RO-Arbeitsstufen I und II in die 1. Arbeitsstufe der MD-RO zurückgeführt wird. Der in Trinkwasserqualität anfallende Produktanteil steigt damit auf 99,88%.

Schema 2 zeigt dabei - ebenso wie die im nachfolgenden beschriebenen Schemata 3 und 4 - die jeweiligen Grenzparameter der einzelnen Stufen zur organischen Belastung (CSB-Werte in mg/l) sowie zur Leitfähigkeit (LF-Werte in µS/cm). Grundsätzlich gelten auch für Schema 2 und für die im nachfolgenden dargestellten Schemata 3 und 4 die weiterführenden Aussagen der Erfindungsbeschreibung im Zusammenhang mit der Erläuterung von Schema 1, so daß hier auf eine Wiederholung ausführlicher Angaben zu den einzelnen Arbeitsstufen verzichtet werden kann.

Das Verfahrensschema 3 lehnt sich an die Modifikation des in Schema 2 dargestellten Verfahrens an. Auch hier wird das Konzentrat aus der 2. Arbeitsstufe der HD-RO einer nachfolgenden Eindampfung unter Gewinnung eines in die MD-RO rückgeführten wäßrigen Kondensates unterworfen. Gegenüber der in Schema 2 dargestellten Prozeßabfolge sind hier die folgenden Modifikationen ersichtlich:
Einsatzgut ist ein biologisch stark verunreinigtes Abwasser mit einem CSB-Wert oberhalb 8.000 mg/l, das in einer ersten biologischen Reinigungsstufe der anaeroben Reinigung unterworfen wird. Die dabei anfallenden Biogasanteile werden zur Energiegewinnung in den abschließenden Arbeitsstufen der Eindampfung und Trocknung nach der HD-RO eingesetzt. Hierdurch können zusätzliche Verfahrensvorteile in beträchtlichem Ausmaß erhalten werden. Auch die Entsorgung der letztlich in Trockenphase anfallenden salzhaltigen Ballaststoffe wird substantiell erleichtert.

Das Fließschema 4 zeigt schließlich eine weitere Modifikation des erfindungsgemäßen Mehrstufenverfahrens, die - wie eingangs schon erwähnt - dann zum Tragen kommen kann. wenn in der zu reinigenden Abwasserphase Ballaststoffe gelöst vorliegen, die eine vergleichsweise starke Temperaturabhängigkeit ihrer Löslichkeit in der wäßrigen Phase - insbesondere im Temperaturbereich von 5 bis 50 °C - aufweisen. Hier kann dann beispielsweise durch die Kombination des mehrstufigen Membran-Trennverfahrens mit den Arbeitsstufen der Ultrafiltration (UF) und der Reversosmose bei mittleren Drucken (MD-RO) mit einer nachfolgenden Kristallisationsstufe gelöster Salzgehalte im MD-RO-Konzentrat eine weitergehende Reinigung unter Rückgewinnung zusätzlicher wäßriger Anteile durchgeführt werden. Hier gilt dann beispielsweise das Folgende:
Die Verfahrensstufe der MD-RO konzentriert die gelösten Salze bei einem Betriebsdruck von beispielsweise ca. 40 bar bis zu ihrer Sättigung bei Arbeitstemperatur in der wäßrigen Phase auf. Diese Arbeitstemperatur beträgt beispielsweise 30°C. Die Wasserlöslichkeit von Natriumsulfat (Glauber-Salz) in Wasser ist im Temperaturbereich von 5 bis 30°C sehr stark temperaturabhängig. Lösen sich bei 30°C noch ca. 40 bis 41 g des 10 Kristallwasser enthaltenden Natriumsulfates in 100 g Wasser, so sinkt die Löslichkeitsgrenze bei Absenkung der Temperatur auf 5°C auf den Wert von etwa 6.3 g/100 g Wasser. Das Fließschema 4 macht hiervon wie folgt Gebrauch:
Das aus der Verfahrensstufe I der MD-RO abgezogene Konzentrat wird einer nachgeschalteten MD-RO-Arbeitsstufe zugeführt, deren Filtrat in die vorgeschaltete Arbeitsstufe I MD-RO rückgeführt wird. Das Konzentrat aus der nachgeschalteten Arbeitsstufe zur Aufarbeitung des Primärkonzentrates wird in einer nachfolgenden Kristallisationsstufe durch Temperaturabsenkung auf Werte im Bereich von beispielsweise 5 bis 15°C zur Phasentrennung gebracht. Der wäßrige Überstand wird in die unmittelbar zuvorliegende Arbeitsstufe der MD-RO rückgeführt, während der Kristallschlamm abgetrennt und gewünschtenfalls in einer nachgeschalteten Trocknungsstufe weiter aufgetrocknet wird. Die Angaben von Schema 4 zu dem auf diese Weise erzielenden Gesamtbetrag an Prozeßwasser in Trinkwasserqualität zeigen, daß auch hier mit 99,75% die nahezu vollständige Rückgewinnung des eingesetzten Schmutzwassers als Trinkwasser möglich ist.

Für alle hier angesprochenen Modifikationen des erfindungsgemäßen Reinigungsverfahrens unter Umwandlung von Wasch- und Prozeßwässern in Reinstwasser von Trinkwasserqualität gilt der im nachfolgenden beschriebene zusätzliche Prozeßvorteil:

Das erfindungsgemäß anfallende gereinigte Abwasser in Trinkwasserqualität ist jetzt vollkommen enthärtet, wenn es in den vorgeschalteten Ablauf der Reinigungsschritte zurückgeführt wird. Die in diesem vorgeschalteten Arbeitsschritt - beispielsweise also bei der Spülung von Mehrwegflaschen und Behältern aus dem Bereich der Nahrungsmittel- beziehungsweise Getränkeindustrie - eingesetzten Reiniger können der verbesserten Wasserqualität angepaßt werden. So ist beispielsweise eine substantielle Einsparung von Komplexierungsmitteln wie EDTA und/oder von Tensiden möglich. Die Komplexierungsmittel müssen nur noch die über den Schmutz eingebrachten Ionen abfangen. Die Tensidverbindungen wirken bei weichem Wasser bekanntlich substantiell besser. Das führt nicht nur zu einer beträchtlichen Kosteneinsparung, der verminderte Einsatz von Reinigungschemikalien entlastet darüberhinaus die Abwasserbehandlung insbesondere die Arbeitsschritte der Umkehrosmose aufgrund des insgesamt verminderten Salzgehaltes. Dadurch kann letztlich die Ausbeute an Trinkwasser noch weiter erhöht werden - das Scaling auf den RO-Membranen nimmt ab, der osmotische Druck sinkt.

Die nachfolgende Beispiele geben weiterführende Einzelheiten zu den einzelnen Verfahrensstufen der erfindungsgemäßen Lehre.

### Beispiel

Das Abwasser einer Abfüllfabrik für Erfrischungsgetränke wird einem Aufarbeitungszyklus unterworfen, der schematisch in der Anordnung seiner Arbeitsstufen und in den Mengenangaben der in der Versuchsanlage pro Tag eingesetzten Flüssigkeitsströme beziehungsweise -Kreislaufströme in Schema 1 zusammenfassend dargestellt ist. Schema 1 zeigt gleichzeitig die Ausbeute einerseits an Produktstrom in Trinkwasserqualität - mehr als 99 Vol.-% - und die geringfügige Menge an isoliertem und entsorgungsbedürftigem Konzentrat.

Die nachfolgenden Angaben beschreiben die einzelnen, in Schema 1 dargestellten Arbeitsstufen, die darin eingesetzten technischen Arbeitsmittel und die zugehörigen Arbeitsbedingungen sowie die Verknüpfung der einzelnen Arbeitsstufen miteinander.

Die beigefügten Tabellen 1 bis 3 stellen schließlich die wesentlichen Kennwerte für eine Serie von erfindungsgemäß durchgeführten Aufarbeitungsverfahren (V1 bis V8) beziehungsweise für jeweiligen Produkte der einzelnen Verfahrensschritte zusammen, Bestimmt sind dabei die CSB-Werte (mg/l), die Keimzahl (K/g), die Leitfähigkeit (mS/cm), der Gesamtstickstoff (mg/l) und der Gesamt-Phosphor (mg/l).

Im einzelnen gilt zur Durchführung der jeweiligen Versuche:

### 1. Ultrafiltration:

Bei den Versuchen werden anorganische Membranen mit Kohlenstoff als Trägermaterial und einer aufgesinterten Titandioxidschicht als eigentliche Membranschicht eingesetzt. Die Trenngrenze der Membranen (Cut-off-Wert) lag bei 300.000 Dalton. Bei einer Membranfläche von 3.42 m² konnten in der Stunde ca. 2 m³ Abwasser filtriert werden. Der Filtratfluß betrug durchschnittlich 600 l/hm² bei folgenden Betriebsparametern:

| | |
|---|---|
| Transmembrane Druckdifferenz | 4 bar |
| Temperatur des Abwassers | 15 bis 35°C |
| Überströmungsgeschwindigkeit | 4 m/s |

Das Permeat der Ultrafiltration wies einen CSB-Wert von durchschnittlich 49 mg/l auf. Die Leitfähigkeit lag bei 3.2 mS/cm. Das Konzentrat der Ultrafiltration, ca. 10% der Gesamtmenge. wird nach einer Oxidationsstufe in die biologische Abwasserbehandlung zurückgeführt.

### 2. Oxidation:

Das Konzentrat der Ultrafiltration wird in einer UV-Oxidationsanlage mit 400 J/m2 und einer Wellenlänge der UV-Strahlen von 254 nm bestrahlt. Der CSB-Wert des Konzentrates der Ultrafiltration konnte auch ohne Zusatz von Oxidationsmitteln - beispielsweise H₂O₂ - um 50% reduziert werden. Nach der Anoxidation von eventuell schwer biologisch abbaubaren Inhaltsstoffen gelangt das Ultrafiltrationskonzentrat zurück in die biologische Abwasserreinigung.

### 3. Reversosmose I bei 30 bar:

Das Permeat der Ultrafiltration wird in einer Reversosmoseanlage soweit aufgereinigt, daß die Grenzwerte der Trinkwasserverordnung eingehalten werden können. Zum Einsatz kommt hier eine organische Reversosmosemembran in Spiralwickelmodulbauweise mit einer Membranfläche von 2 m².

| Betriebsparameter | |
|---|---|
| Transmembrane Druckdifferenz | 30 bar |
| Temperatur des Abwassers | 15 bis 35°C |
| Durchschnittlicher Filtratfluß | 68 l/hm² |
| Durchschnittliches Salzrückhaltevermögen | 99,2% |

### 4. Reversosmose II bei 30 bar:

Die Grenzwerte der Trinkwasserverordnung sind bereits nach der Reversosmose I bei 30 bar erreicht. Eine zweite Reversosmose soll die Betriebssicherheit auch bei schwankenden Salzgehalten im Abwasser garantieren.

| Betriebsparameter | |
|---|---|
| Transmembrane Druckdifferenz | 30 bar |
| Temperatur des Abwassers | 15 bis 35°C |
| Durchschnittlicher Filtratfluß | 100 l/hm² |
| Durchschnittliches Salzrückhal tevermögen | 97,1% |

Für die Reversosmose II bei 30 bar wird der gleiche Membrantyp in Spiralwickelmodulbauweise wie bei der Reversosmose I bei 30 bar eingesetzt. Das Konzentrat der Reversosmose II fließt in die Reversosmose I zurück. Das keimfreie Permeat der Reversosmose II steht als Trinkwasser zur weiteren Nutzung zur Verfügung. Die Ausbeute (Trinkwasser/Abwasser) betrug 99,6%.

### 5. Hochdruck-Reversosmose I:

Das Konzentrat der Reversosmose I bei 30 bar (Stufe III) wird in einer 2-stufigen Hochdruck-Reversosmose weiter aufkonzentriert. Die organischen Membranen in Form von Membrankissen mit innenliegendem Gewebespacer zur Permeatableitung sind in einem Plattenmodul mit insgesamt 12 m² Membranfläche zusammengefaßt.

| Betriebsparameter | |
|---|---|
| Transmembrane Druckdifferenz | 65 bar |
| Temperatur des Abwassers | 15 bis 35°C |
| Durchschnittlicher Filtratfluß | 8 l/h m² |
| Durchschnittliches Salzrückhaltevermögen | 99% |

Das Permeat wird in die Reversosmose I bei 30 bar zurückgeführt.

### 6. Hochdruck-Reversosmse II:

Das Konzentrat der ersten Hochdruck-Reversosmose wird in einer weiteren Stufe auf ein Minimum eingeengt. Die Membrananlage ist mit der Hochdruck-Reversosmose I identisch.

| Betriebsparameter | |
|---|---|
| Transmembrane Druckdifferenz | 120 bar |
| Temperatur des Abwassers | 15 bis 35°C |
| Durchschnittlicher Filtratfluß | 5 l/h m² |
| Durchschnittliches Salzrückhaltevermögen | 98% |

Die verbleibende Konzentratmenge beträgt 0,4% der anfänglichen Abwassermenge. Das Permeat wird in die Reversosmose I bei 30 bar zurückgeführt.

Schema I zeigt den Verfahrensablauf in den Versuchsanlagen in schematischer Darstellung mit den zugehörigen Abwassermengen.

In den Tabellen 1 bis 3 sind die Analysenwerte von 8 Versuchsdurchgängen (V1 bis V8) zusammengefaßt.

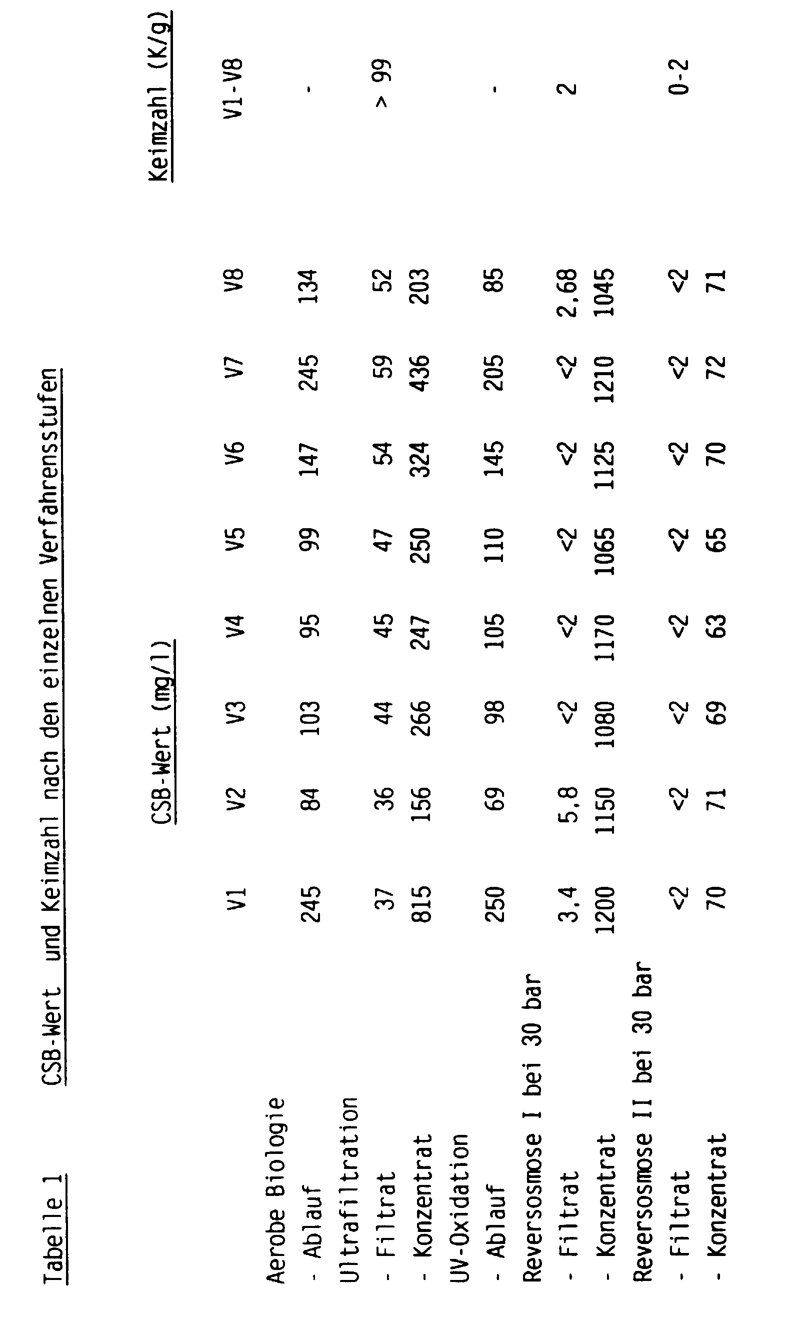

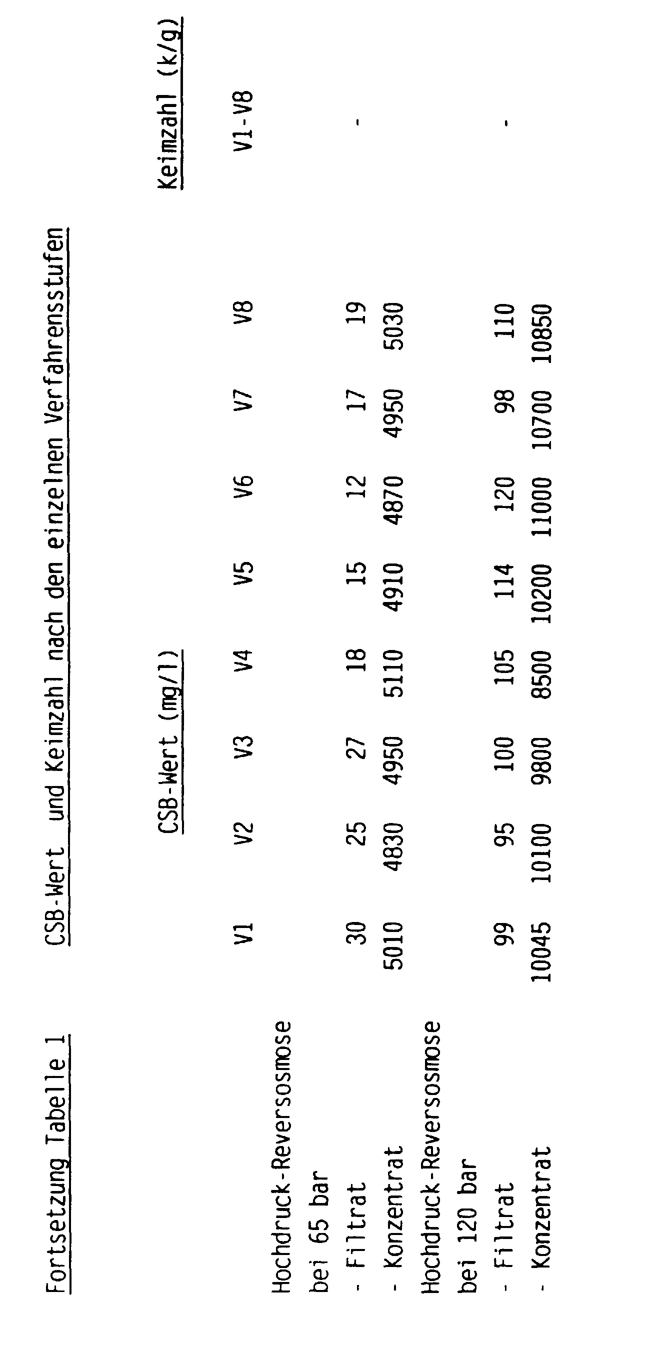

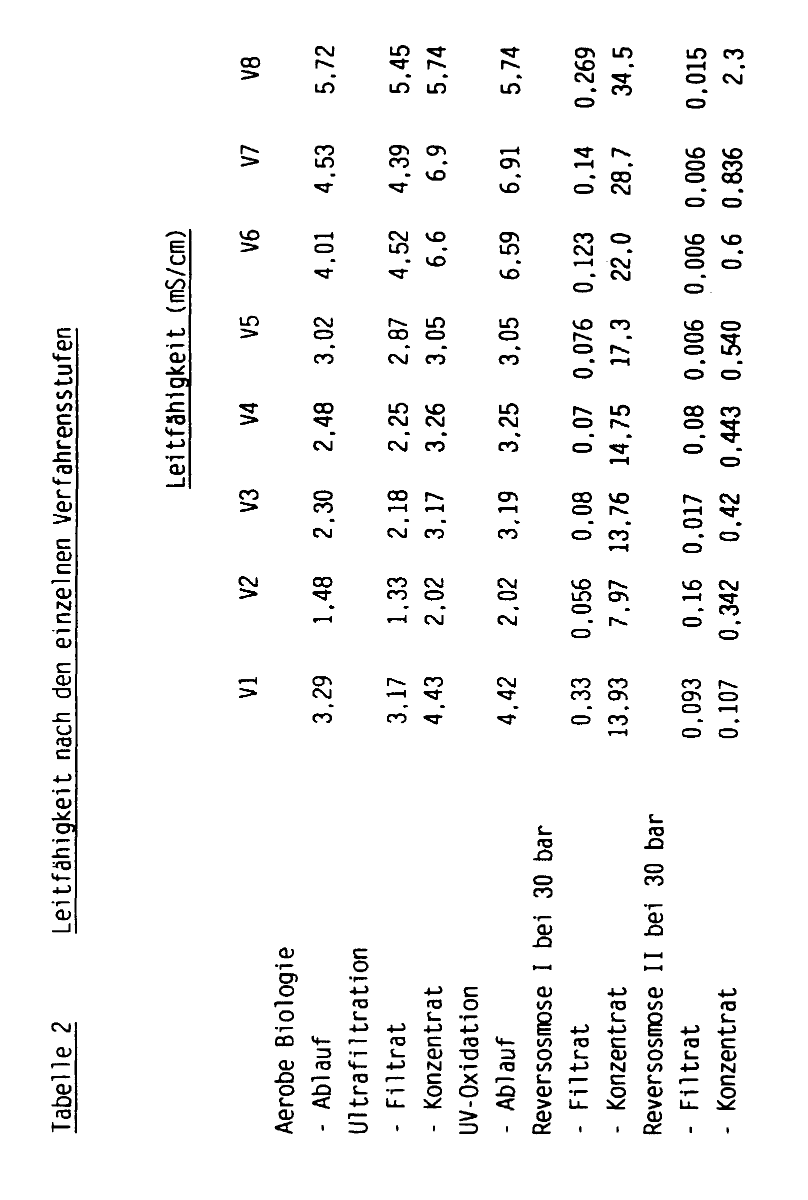

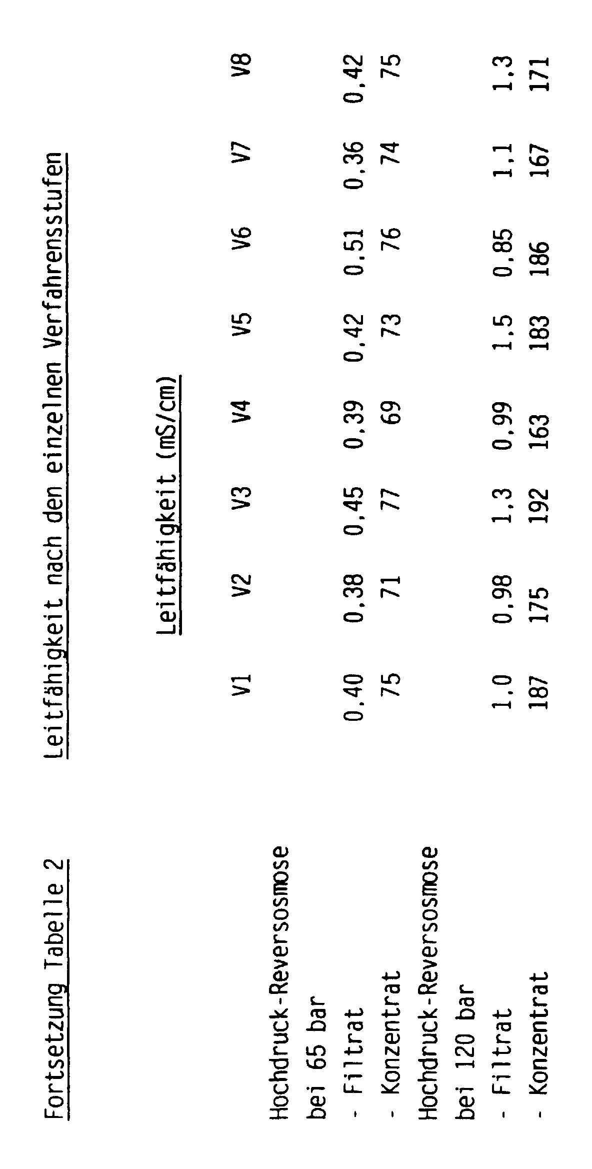

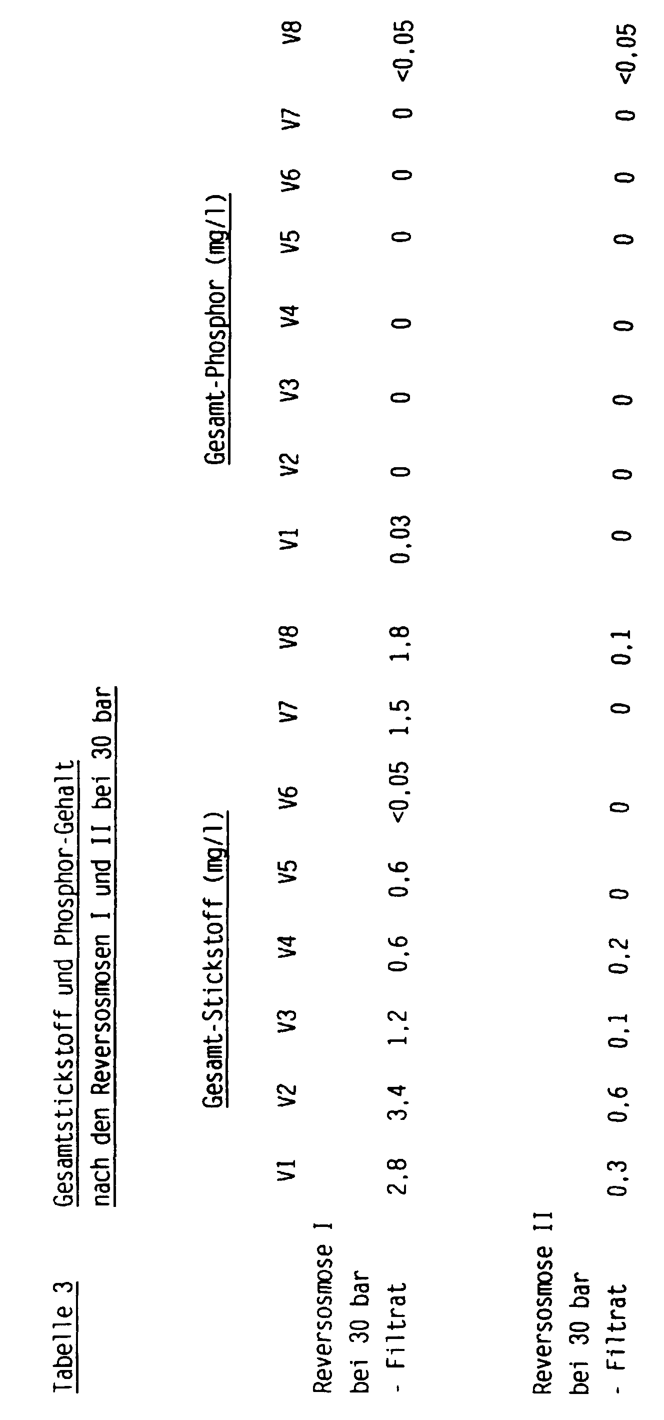

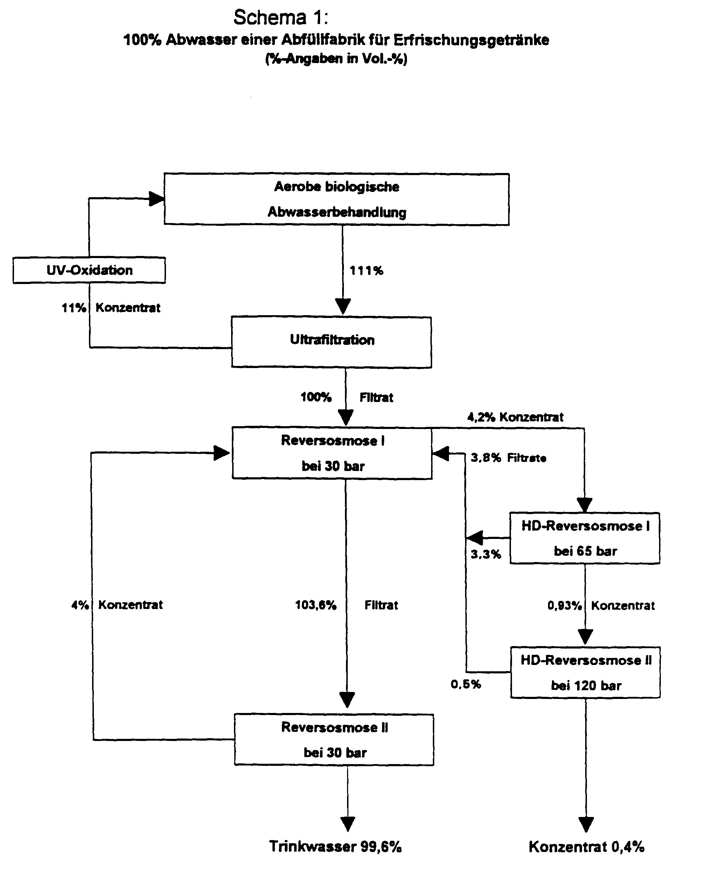

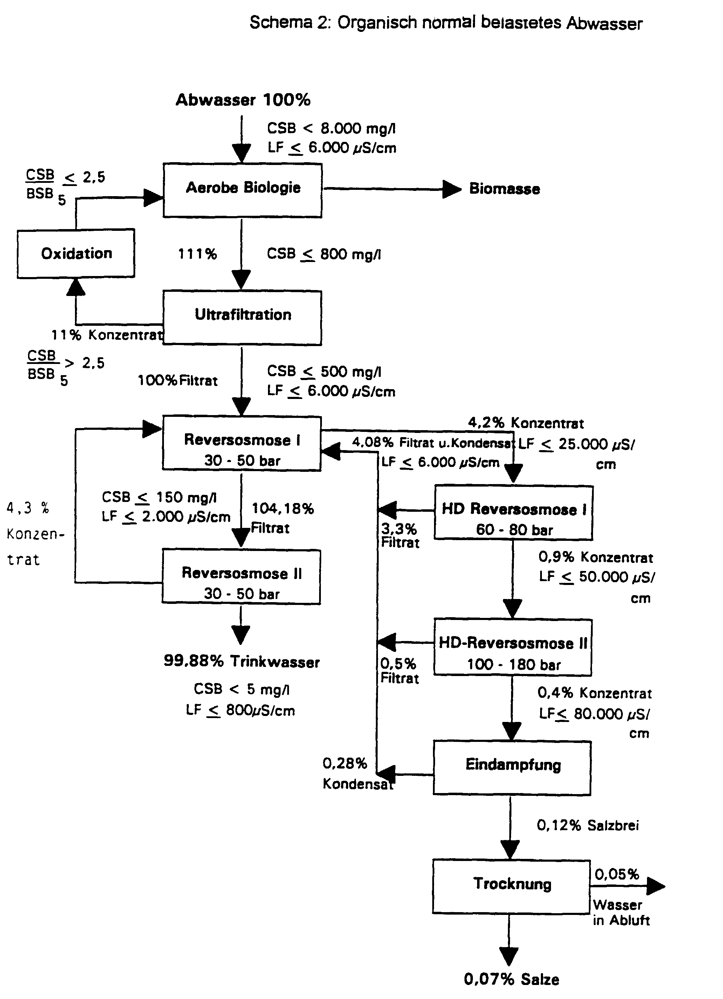

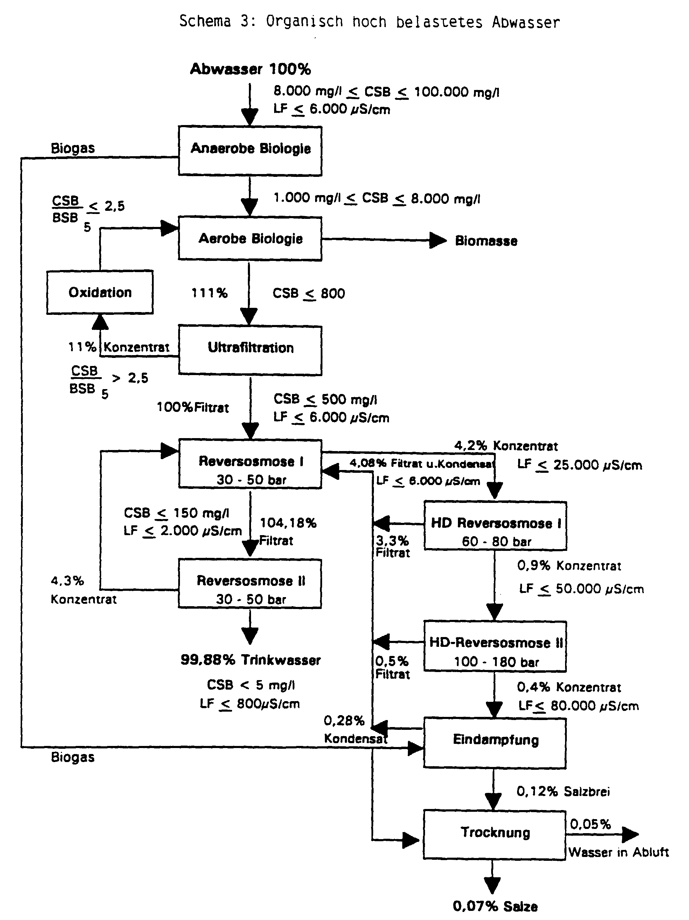

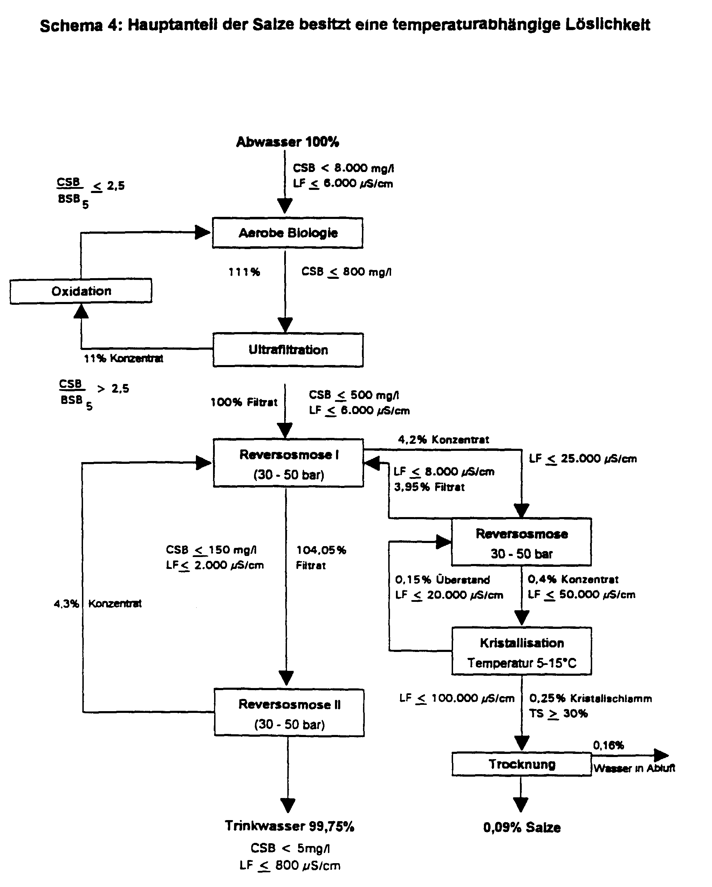

## Patentansprüche

1. Verfahren zur Schmutz- und/oder Abwasseraufbereitung mittels eines mehrstufigen Verfahrens zur Abtrennung der Verunreinigungen (Ballaststoffe) unter Einschluß wenigstens einer Membrantrennung und Kreislaufführung intermediär anfallender Konzentrat-Teilströme, dadurch gekennzeichnet, daß man zur Gewinnung eines Produktstromes in Trinkwasserqualität und optimierter Ausbeute ein gewünschtenfalls teilgereinigtes Einsatzwasser einer Sequenz der nachfolgenden Membran-Trennverfahren unterwirft:
Ultrafiltration (UF) mit Rückführung des UF-Konzentrates;
Reversosmose des UF-Filtrates bei mittleren Arbeitsdrucken bis 50 bar (MD-RO). die 1- oder bevorzugt mehrstufig durchgeführt werden kann, unter Gewinnung des Produktwassers in Trinkwasserqualität als MD-RO-Filtrat;
Aufteilung des MD-RO-Konzentrates mittels weiterer Membran- und/oder Phasentrennung unter Gewinnung wenigstens eines wäßrigen Anteiles dieses Konzentrates mit abgereichertem Gehalt an Ballaststoffen und
Kreislaufrückführung dieses Konzentratanteiles in die MD-RO.

2. Verfahren nach Anspruch 1, dadurch gekennzeichnet, daß die Aufteilung des MD-RO-Konzentrates in einer bevorzugt mehrstufigen Hochdruck-Reversosmose (HD-R0), durch wenigstens anteiliges Eindampfen und/oder durch Überführung gelöster Anteile der Ballaststoffe in unlösliches mit Abtrennung der ungelösten Anteile vorgenommen wird.

3. Verfahren nach Ansprüchen 1 und 2. dadurch gekennzeichnet, daß ein biologisch vorgereinigtes Schmutz- beziehungsweise Abwasser der Membrantrennung unterworfen wird, wobei anaerob und/oder aerob vorgereinigtes Einsatzwasser dem mehrstufigen Membran-Trennverfahren zugeführt werden kann.

4. Verfahren nach Ansprüchen 1 bis 3, dadurch gekennzeichnet, daß das rückzuführende UF-Konzentrat wenigstens anteilig einer dem mehrstufigen Membran-Trennverfahren vorgeschalteten biologischen Reinigungsstufe zugeführt wird.

5. Verfahren nach Ansprüchen 1 bis 4, dadurch gekennzeichnet, daß das UF-Konzentrat vor seiner Rückführung in eine vorgeschaltete biologische Reinigung oxidierenden Bedingungen ausgesetzt wird.

6. Verfahren nach Ansprüchen 1 bis 5, dadurch gekennzeichnet, daß bei der Reinigung des MD-RO-Konzentrates in einer mehrstufigen HD-RO mit stufenweise ansteigenden Drucken in den aufeinanderfolgenden HD-RO-Stufen und gleichzeitiger Aufkonzentrierung des HD-RO-Konzentrates gearbeitet wird.

7. Verfahren nach Ansprüchen 1 bis 6, dadurch gekennzeichnet, daß bei mehrstufiger MD-RO Konzentrat(e) der Sekundärstufe(n) in die primäre MD-RO rückgeführt werden.

8. Verfahren nach Ansprüchen 1 bis 7, dadurch gekennzeichnet, daß die HD-RO bei Drucken gleich/größer 50 bar, vorzugsweise im Bereich von 60 bis 180 bar, vorgenommen wird, wobei eine erste HD-RO-Arbeitsstufe bei Drucken kleiner 100 bar und eine abschließende HD-RO bei Drucken gleich/größer 100 bar durchgeführt werden kann.

9. Verfahren nach Ansprüchen 1 bis 8, dadurch gekennzeichnet, daß auch aus dem Konzentrat der HD-RO - vorzugsweise mittels Phasentrennung. durch Eindampfen und/oder Trocknen - Wasser-Restanteile abgetrennt werden, die wenigstens anteilsweise in die Arbeitsstufen zur Gewinnung des Wassers in Trinkwasserqualität zurückgeführt werden.

10. Verfahren nach Ansprüchen 1 bis 9, dadurch gekennzeichnet, daß beim Vorliegen gelöster Ballaststoffe mit ausgeprägt Temperatur-abhängiger Wasserlöslichkeit - insbesondere im Temperaturbereich von 5 bis 50°C - eine partielle Abtrennung entsprechender Ballaststoffe durch Abkühlung eines aufgewärmten Konzentrates mit gelösten Ballaststoffen und nachfolgende Phasentrennung vorgenommen wird, wobei als wäßrige Einsatzflüssigkeiten insbesondere Konzentrate aus der Membrantrennung einer solchen Abtrennung von Ballaststoffen unterworfen werden.

11. Verfahren nach Ansprüchen 1 bis 10, dadurch gekennzeichnet, daß das Einsatzwasser zu mehr als 85 Vol.-%, vorzugsweise zu mehr als 90 Vol.-% und insbesondere zu mehr als 95 bis 98 Vol.-% in Produktwasser von Trinkwasserqualität umgewandelt wird.

12. Verfahren nach Ansprüchen 1 bis 11, dadurch gekennzeichnet, daß verunreinigtes Einsatzwasser mit CSB-Werten gleich/kleiner 3.000 mg/l, und insbesondere mit CSB-Werten kleiner 1.000 mg/l, der mehrstufigen Membrantrennung zugeführt wird, wobei stärker verunreinigte Schmutz- und/oder Abwässer zunächst einer gegebenenfalls mehrstufigen und insbesondere biologischen Vorbehandlung unterzogen werden, die anaerob und/oder aerob ausgebildet sein kann.

13. Verfahren nach Ansprüchen 1 bis 12, dadurch gekennzeichnet, daß eine anaerobe Vorbehandlung bei Schmutz- und/oder Abwässern mit Einsatz-CSB-Werten gleich/größer 8.000 mg/l, z.B. im Bereich bis 100.000 mg/l, vorgenommen wird, wobei es bevorzugt sein kann, die bei der anaeroben Aufbereitung anfallende brennfähige Gasphase als Energiequelle im nachfolgenden mehrstufigen Reinigungsverfahren einzusetzen.

14. Anwendung des Verfahrens nach Ansprüchen 1 bis 13, zur Reinigung hochbelasteter und insbesondere entsprechend organisch verunreinigter Wasch- und/oder Prozeß-Abwässer, z.B. aus dem Bereich der Nahrungsmittel- und Getränke-Industrie sowie der Papier- und Zellstoffindustrie, unter Rückgewinnung von Frischwasser für das jeweilige Einsatzgebiet.

15. Verwendung nach Anspruch 14, zur Gewinnung von hochreinem Wasch- und Spülwasser in der Rezyklisierung von Mehrweg-Verpackungen, insbesondere Mehrweg-Flaschen und/oder -Behältern der Nahrungsmittel- und Getränke-Industrie.

## Claims

1. A multistage process, including at least one membrane separation stage, for treating polluted process water and/or wastewater by removing the pollutants ("ballast components"), concentrate sidestreams accumulating in the various stages being recirculated, characterized in that, to obtain a product stream of drinking water quality and an optimized yield, an optionally partly purified starting water is subjected to a sequence of following membrane separation processes:
ultrafiltration (UF) with recycling of the UF concentrate;
reverse osmosis of the UF filtrate in one or more stages, preferably several stages, at medium working pressures of up to about 50 bar (MD-RO), the product water of drinking water quality being obtained as the MD-RO filtrate;
dividing up the MD-RO concentrate by further membrane and/or phase separation stages to obtain at least one aqueous component of the concentrate with a depleted content of ballast components and
recirculation of this concentrate component to the MD-RO.

2. A process as claimed in claim 1, characterized in that the MD-RO concentrate is divided up in a preferably multistage high-pressure reverse osmosis (HD-RO) by at least partial concentration by evaporation and/or by converting dissolved parts of the ballast components into insoluble material with removal of the undissolved parts.

3. A process as claimed in claims 1 and 2, characterized in that a biologically pretreated wastewater is subjected to the membrane separation cycle, in which case anaerobically and/or aerobically pretreated starting water can be delivered to the multistage membrane separation process.

4. A process as claimed in claims 1 to 3, characterized in that the UF concentrate to be returned is at least partly delivered to a biological treatment stage preceding the multistage membrane separation process.

5. A process as claimed in claims 1 to 4, characterized in that the UF concentrate is exposed to oxidizing conditions before being returned to a preliminary biological treatment stage.

6. A process as claimed in claims 1 to 5, characterized in that the treatment of the MD-RO concentrate in a multistage HD-RO is carried out with increasing pressures in the successive HD-RO stages and simultaneous concentration of the HD-RO concentrate.

7. A process as claimed in claims 1 to 6, characterized in that, in multistage MD-RO, concentrate(s) of the secondary stage(s) are returned to the primary MD-RO.

8. A process as claimed in claims 1 to 7, characterized in that the HD-RO carried out under pressures of 50 bar or higher and preferably in the range from 60 to 180 bar, a first HD-RO stage being carried out at pressures below 100 bar and a concluding HD-RO stage being carried out under pressures of 100 bar or higher.

9. A process as claimed in claims 1 to 8, characterized in that residual water is also removed from the HD-RO concentrate, preferably by phase separation, concentration by evaporation and/or drying, and is at least partly returned to the stages for obtaining the water of drinking water quality.

10. A process as claimed in claims 1 to 9, characterized in that, where dissolved ballast components whose solubility in water is heavily temperature-dependent - particularly at temperatures of 5 to 50°C - are present, they are partly removed by cooling a preheated concentrate containing dissolved ballast components and subjecting it to phase separation, concentrates from the membrane separation in particular being subjected as aqueous starting liquids to such a removal of ballast components.

11. A process as claimed in claims 1 to 10, characterized in that more than 85% by volume, preferably more than 90% by volume and, more preferably, more than 95 to 98% by volume of the starting water is converted into product water of drinking water quality.

12. A process as claimed in claims 1 to 11, characterized in that polluted wastewater with COD values of 3,000 mg/l or lower and, more particularly, 1,000 mg/l or lower is subjected to the multistage membrane separation, relatively heavily polluted wastewater first being subjected to an optionally multistage and, above all, biological pretreatment under anaerobic and/or aerobic conditions.

13. A process as claimed in claims 1 to 12, characterized in that wastewaters with starting COD values of 8,000 mg/l or higher, for example up to 100,000 mg/l, are subjected to an anaerobic pretreatment, the combustible gas phase accumulating during anaerobic pretreatment preferably being used as an energy source in the following multistage purification process.

14. The use of the process claimed in claims 1 to 13 for purifying heavily polluted and, in particular, organically polluted washing and/or process wastewaters, for example from the food and beverage industry and the paper and cellulose industry, to recover fresh water for the particular application.

15. The use claimed in claim 14 for obtaining high-purity washing and rinsing water in the recycling of returnable packs, more particularly returnable bottles and/or containers of the type used in the food and beverage industry.

## Revendications

1. Procédé de traitement des eaux polluées et/ou usées au moyen d'un procédé à plusieurs étapes de séparation des impuretés (lest) incluant au moins une séparation par membrane et le passage dans un cycle des courants partiels de concentré qui apparaissent de façon intermédiaire,
caractérisé en ce que
• pour obtenir un courant de produit ayant la qualité de l'eau potable et un rendement optimisé on soumet une eau usée, si on le désire partiellement purifiée, à une séquence de procédés de séparation à membrane ci-dessous :
• ultrafiltration (UF) avec réintroduction du concentré (UF) ;
• osmose inverse du filtrat (UF) à des pressions de travail moyennes allant jusqu'à 50 bars (OI-MP) qui peuvent être effectués en une ou de préférence en plusieurs étapes, avec obtention de l'eau produite avec une qualité d'eau potable comme filtrat OI-MP ;
• séparation du concentré OI-MP au moyen d'une séparation à membrane et/ou d'une séparation de phases avec obtention au moins d'une fraction aqueuse de ce concentré ayant une teneur appauvrie en lest et
• introduction en cycle de cette fraction concentrée dans la OI-MP.

2. Procédé selon la revendication 1,
caractérisé en ce que
la séparation du concentré OI-MP s'effectue dans une osmose inverse haute pression (OI-HP) de préférence à plusieurs étapes, au moyen d'une évaporation au moins partielle, et/ou par transformation des fractions dissoutes du lest en fractions insolubles avec séparation des fractions non dissoutes.

3. Procédé selon la revendication 1 et 2,
caractérisé en ce qu'
on soumet une eau polluée ou selon les cas une eau usée prépurifiée par un moyen biologique, à une séparation à membrane, où l'on peut introduire une eau usée prépurifiée de façon anaérobie et/ou aérobie dans le procédé de séparation à membrane en plusieurs étapes.

4. Procédé selon les revendications 1 à 3,
caractérisé en ce qu'
on introduit le concentré (UF) à recycler de façon moins partielle dans l'une des étapes de purification biologique disposées avant le procédé de séparation à membrane en plusieurs étapes.

5. Procédé selon les revendications 1 à 4,
caractérisé en ce qu'
on soumet le concentré (UF) à des conditions oxydantes avant sa réintroduction dans une purification biologique disposée en amont.

6. Procédé selon les revendications 1 à 5,
caractérisé en ce que
lors de la purification du concentré OI-MP on travaille dans une OI-HP avec des pressions croissant par étapes dans les étapes successives d'OI-HP avec concentration simultanée du concentré d'OI-HP.

7. Procédé selon les revendications 1 à 6,
caractérisé en ce que
dans la OI-MP à plusieurs étapes on réintroduit le ou les concentré(s) du ou des paliers secondaires dans la OI-MP primaire.

8. Procédé selon les revendications 1 à 7,
caractérisé en ce qu'
on conduit la OI-HP à des pressions égales ou supérieures à 50 bars, de préférence dans un intervalle de 60 à 180 bars, opération dans laquelle on peut réaliser une première étape de travail OI-HP à des pressions inférieures à 100 bars et une OI-HP qui la suit à des pressions égales ou supérieures à 100 bars.

9. Procédé selon les revendications 1 à 8,
caractérisé en ce qu'
on sépare du concentré d'OI-HP - de préférence au moyen d'une séparation de phases, par évaporation et/ou séchage - les fractions aqueuses résiduelles qui sont réintroduites au moins en partie dans les étapes de travail pour l'obtention de l'eau avec une qualité d'eau potable.

10. Procédé selon les revendications 1 à 9,
caractérisé en ce qu'
en cas de présence de lest dissous ayant une solubilité dans l'eau qui varie en fonction de la température prononcée - en particulier dans un intervalle de température compris entre 5 et 50°C - on procède à une séparation partielle des lests (ballast) correspondants par refroidissement d'un concentré chauffé avec du lest dissous, puis à une séparation de phases, opération dans laquelle on soumet comme liquides usés aqueux en particulier des concentrés provenant de la séparation par membrane à telle opération de séparation du lest (ballast).

11. Procédé selon les revendications 1 à 10,
caractérisé en ce qu'
on transforme l'eau usée à plus de 85 % en volume, de préférence à plus de 90 % en volume et en particulier à plus de 95 à 98 % en volume, en eau produite ayant une qualité d'eau potable.

12. Procédé selon les revendications 1 à 11,
caractérisé en ce qu'
on introduit de l'eau usée polluée ayant des valeurs de capacité chimique d'oxydation (CSB) égales ou inférieures à 3000 mg/l, et en particulier ayant des valeurs de capacité chimique d'oxydation (CSB) inférieures à 1000 mg/l, à la séparation à membrane en plusieurs étapes, opération dans laquelle on soumet tout d'abord les eaux polluées et/ou usées les plus fortement polluées à un prétraitement éventuellement à plusieurs étapes et en particulier biologique qui peut être anaérobie et/ou aérobie.

13. Procédé selon les revendications 1 à 12,
caractérisé en ce qu'
on procède à un prétraitement anaérobie des eaux polluées et/ou usées avec des valeurs de capacité chimique d'oxydation (CSB) du liquide utilisé égales ou supérieures à 8000 mg/l, par exemple dans un intervalle allant jusqu'à 100 000 mg/l, opération dans laquelle on peut préférer utiliser la phase gazeuse combustible qui apparaît lors du traitement anaérobie comme source d'énergie dans le procédé de purification à plusieurs étapes qui suit.

14. Utilisation du procédé selon les revendications 1 à 13, pour la purification d'eaux usées de lavage et/ou de procédé très chargées et en particulier polluées de façon correspondante par des polluants organiques, provenant par exemple du domaine de l'industrie alimentaire et des boissons, ainsi que de l'industrie du papier et de la cellulose, avec réobtention de l'eau fraîche pour le domaine d'utilisation considéré.

15. Utilisation selon la revendication 14, pour l'obtention d'une eau de lavage et de rinçage très pure dans le recyclage des emballages réutilisables, en particulier des bouteilles et/ou récipients consignables dans l'industrie alimentaire et des boissons.
